# EUROPEAN PATENT APPLICATION

(11) **EP 4 468 455 A1**
(43) Date of publication of application: **27.11.2024**
(21) Application number: 23769479.9
(22) Date of filing: 10.02.2023
(51) Int. Cl.: H01M 10/613, H01M 10/6563, H01M 50/258

(54) **HEAT DISSIPATION MECHANISM, BATTERY MODULE AND ELECTRIC DEVICE**

(30) Priority: 15.03.2022 CN 202220564188 U
(71) Applicant: Contemporary Amperex Technology Co., Limited, Ningde, Fujian 352100 (CN)
(72) Inventor: BAO, Cong, Ningde, Fujian 352100 (CN); CHEN, Guize, Ningde, Fujian 352100 (CN); ZENG, Chao, Ningde, Fujian 352100 (CN)
(74) Representative: Ziebig Hengelhaupt Intellectual Property Attorneys Patentanwaltskanzlei PartGmbB
(86) International application number: PCT/CN2023/075413
(87) International publication number: WO 2023/173968

(57) **Abstract**

This application relates to a cooling mechanism, a battery module, and an electric apparatus. The cooling mechanism includes an air cooling fin (100), where the air cooling fin (100) has a first side (110) and a second side (120) opposite in a first direction (X), and the air cooling fin (100) is provided with a cooling channel extending longitudinally in a second direction (Y) on the first side (110) and/or the second side (120), where the first direction (X) is perpendicular to the second direction (Y). The cooling mechanism can address the problem of inadequate cooling in the battery module, which can affect the lifespan, performance, and safety of the battery module.

## Description

### CROSS-REFERENCE TO RELATED APPLICATIONS

This application refers to Chinese Patent Application No. 202220564188.2, filed on March 15, 2022 and entitled "COOLING MECHANISM, BATTERY MODULE, AND ELECTRIC APPARATUS", which is incorporated herein by reference in its entirety.

### TECHNICAL FIELD

This application relates to the field of battery technologies, and in particular, to a cooling mechanism, a battery module, and an electric apparatus.

### BACKGROUND

A battery module includes multiple battery cells connected in series or parallel. During operation of the battery module, the battery cells generate heat, causing the temperature of the battery module to rise. Traditional battery modules have inadequate cooling, which affects the lifespan, performance, and safety of the battery modules.

### SUMMARY

In view of the foregoing problems, this application provides a cooling mechanism, a battery module, and an electric apparatus that can alleviate the problem of inadequate cooling in the battery module, which affects the lifespan, performance, and safety of the battery module.

According to a first aspect, this application provides a cooling mechanism including an air cooling fin, where the air cooling fin has a first side and a second side opposite in a first direction, and the air cooling fin is provided with a cooling channel extending longitudinally in a second direction on the first side and/or the second side, where the first direction is perpendicular to the second direction.

In the technical solution of this embodiment of this application, with the cooling channel provided on at least one of the two opposite sides of the air cooling fin in the first direction, and the cooling channel extending longitudinally in the second direction, the cooling channel on the air cooling fin extending longitudinally in the second direction can accelerate the diffusion of heat when the air cooling fin is applied to a workpiece. This improves the cooling performance of the workpiece, and thus extends the lifespan and enhances performance and safety of the workpiece.

In some embodiments, the air cooling fin is provided with a first groove on surface of the first side, where the first groove forms a cooling channel; and the air cooling fin is provided with a second groove on surface of the second side, where the second groove forms a cooling channel. With the first groove and the second groove provided respectively on the surfaces of the two opposite sides of the air cooling fin, cooling channels are respectively provided on the two opposite sides of the air cooling fin, thereby improving the cooling effect. In addition, when the air cooling fin is applied to the battery, the first groove and the second groove can absorb the swelling force of the battery cell.

In some embodiments, the first groove and/or the second groove is provided in plurality; and the first grooves and the second grooves are alternately arranged in a third direction, where the third direction is perpendicular to the first direction, and the third direction is also perpendicular to the second direction.

With the multiple first grooves and/or multiple second grooves provided, the number of cooling channels increased, and the multiple cooling channels alternately arranged in the third direction, each section in the third direction is effectively cooled so that cooling is more uniform.

In some embodiments, a groove bottom of the first groove is provided with a first protrusion, and size of the first protrusion in the first direction is smaller than groove depth of the first groove in the first direction; and/or a groove bottom of the second groove is provided with a second protrusion, and the size of the second protrusion in the first direction is smaller than groove depth of the second groove.

With the first protrusion provided at the groove bottom of the first groove, and the size of the first protrusion in the first direction being smaller than or equal to the groove depth of the first groove in the first direction, when the first groove absorbs the swelling of the battery cell, the first protrusion can enhance the structural strength of the first groove. Similarly, with the second protrusion provided at the groove bottom of the second groove, and the size of the second protrusion in the first direction being smaller than or equal to the groove depth of the second groove in the first direction, when the second groove absorbs the swelling force of the battery cell, the second protrusion can enhance the structural strength of the second groove.

In some embodiments, the cooling mechanism includes multiple air cooling fins arranged apart in the first direction, and an accommodating space for accommodating the battery cell is formed between adjacent two of the air cooling fins, and the cooling channel communicates with the accommodating space.

With the multiple air cooling fins arranged apart in the first direction, the accommodating space for accommodating the battery cell formed between the adjacent two of the air cooling fins, and the accommodating space communicating with the cooling channel, cooling channels are provided on two opposite sides of the battery cell, thereby improving the cooling effect for the battery cell.

In some embodiments, at least two clamping members are provided at an edge of the air cooling fin; where the at least two clamping members are provided at two ends of the air cooling fin in the second direction, and/or the at least two clamping members are provided at two ends of the air cooling fin in the third direction, so as to form a clamping space for clamping the battery cell; where the third direction is perpendicular to the first direction, and the third direction is also perpendicular to the second direction.

With the multiple clamping members provided at the edge of the air cooling fin, and the multiple clamping members forming the clamping space for clamping the battery cell, the air cooling fin not only improves the cooling effect for the battery cell but also fixes the battery cell, thereby enhancing the stability of the battery structure.

In some embodiments, the clamping member includes a first clamping section extending in the second direction and a second clamping section extending in the third direction; where the first clamping section and the second clamping section respectively abut against two adjacent side surfaces of the battery cell.

The first clamping section and the second clamping section extend in two mutually perpendicular directions, so that one clamping member forms a right-angled accommodating space. Two side walls of the right-angled accommodating space respectively abut against the two adjacent side surfaces of the battery cell, and multiple clamping members together form the clamping space, so that the structure is simple and clamping is convenient.

In some embodiments, the air cooling fin is provided with a first connecting member on the first side, and is provided with a second connecting member that matches the first connecting member on the second side. In adjacent two of the air cooling fins, the first connecting member of one is fixedly connected to the second connecting member of the other.

With the first connecting member and the second connecting member respectively provided on two opposite sides of the air cooling fin, when multiple air cooling fins are arranged side by side in the first direction, adjacent two of the air cooling fins may be connected through the first connecting member and the second connecting member, thereby enhancing the structural stability of the battery.

In some embodiments, the first connecting member is provided with a clamping protrusion; and the second connecting member is provided with a clamping groove, where the clamping groove snap-fits with the clamping protrusion.

Connection between adjacent two of the air cooling fins is achieved through snap-fit between the clamping groove and the clamping protrusion, enabling convenient and quick operation.

In some embodiments, the first connecting member and the second connecting member are each provided with a support portion for supporting the battery cell.

With the first connecting member and the second connecting member each provided with the support portion for supporting the battery cell, the battery has a more stable structure.

According to a second aspect, this application provides a battery module including the foregoing cooling mechanism.

In some embodiments, the battery module further includes a battery module rack, the air cooling fin is provided within the battery module rack, and the battery module rack is provided with an air inlet and an air outlet that are opposite in the second direction.

The battery module rack provides further support for the battery cell, enhancing the structural stability of the battery module. In addition, providing the air inlet and the air outlet that are opposite in the second direction on the battery module rack improves the cooling effect of the cooling channel.

According to a third aspect, this application provides an electric apparatus including the foregoing battery module, where the battery module is configured to supply electrical energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Those of ordinary skill in the art can clearly understand various other advantages and benefits by reading the detailed description of the preferred embodiments below. The accompanying drawings are merely intended to illustrate the preferred embodiments and are not interpreted as limiting this application. In addition, throughout the accompanying drawings, the same reference signs represent the same components. In the accompanying drawings:
FIG. 1 is a schematic structural diagram of an air cooling fin according to an embodiment of this application;
FIG. 2 is a schematic structural diagram of the air cooling fin in FIG. 1 from another perspective;
FIG. 3 is a schematic structural diagram of a cooling mechanism according to an embodiment of this application;
FIG. 4 is a detailed diagram of an air cooling fin of the cooling mechanism in FIG. 3;
FIG. 5 is a schematic diagram of an assembly structure of an air cooling fin and a battery cell according to an embodiment of this application; and
FIG. 6 is a schematic diagram of a battery module according to an embodiment of this application.

### Reference signs:

100. air cooling fin; 110. first side; 111. first groove; 112. first protrusion; 120. second side; 121. second groove; 122. second protrusion; 130. accommodating space; 140. clamping member; 141. first clamping section; 142. second clamping section; 150. first connecting member; 151. clamping protrusion; 160. second connecting member; 161. clamping groove;
200. battery cell;
X. first direction; Y second direction; and Z. third direction.

### DESCRIPTION OF EMBODIMENTS

To make the objectives, features and advantages of this application more comprehensible, the following further describes specific embodiments of this application in detail with reference to the accompanying drawings. In the following descriptions, numerous specific details are set forth in order to provide a thorough understanding of this application. However, this application can be implemented in many different ways other than those described herein, and those skilled in the art can make similar improvements without departing from the essence of this application. Therefore, this application is not limited by the specific embodiments disclosed below.

In the descriptions of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as a limitation to this application.

In addition, the terms "first" and "second" are merely for the purpose of description, and shall not be understood as any indication or implication of relative importance or any implicit indication of the number of technical features indicated. Therefore, a feature defined by "first" or "second" may explicitly or implicitly include at least one such feature. In the description of this application, "a plurality of means at least two unless otherwise specifically stated, for example two or three.

In the description of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements, unless otherwise specifically stated. Persons of ordinary skills in the art can understand specific meanings of these terms in this application as appropriate to specific situations.

In the description this application, unless otherwise expressly specified and defined, the first feature being "above" or "below" the second feature may mean that the first feature is in direct contact with the second feature or may mean that the first feature and the second feature come into contact indirectly through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

It should be noted that when a component is referred to as being "fastened to" or "provided on" another component, it may be directly fastened to the another component, or there may be a component in between. When a component is deemed as being "connected to" another component, it may be directly connected to the another component, or there may be a component in between. The terms "vertical", "horizontal", "above", "below", "left", "right", and other similar expressions as used herein are for illustration only instead of indicating the only embodiment.

Currently, from a perspective of market development, application of electric vehicle batteries is becoming more and more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous swelling of application fields of traction batteries, market demands for the traction batteries are also swelling.

During charging and discharging of batteries, battery cells generate heat, causing the temperature of batteries to rise. Excessively high temperature affects the lifespan, performance, and safety of batteries.

Currently, in order to cool a battery, a water cooling plate is usually provided at the bottom of a battery cell, or a water cooling channel is provided on a side frame of a box. When the water cooling plate is provided at the bottom of the battery cell, the water cooling plate can cool the bottom of the battery cell to a certain extent, but side surfaces of the battery cell cannot be cooled effectively. Since the area of the side surface of the battery cell is generally large, when this cooling method is used to cool the battery, most zones of the battery cell cannot be effectively cooled. When the water cooling channel is provided on the side frame of the box, in the case of multiple battery cells provided in parallel, neither of two entire side surfaces of two adjacent battery cells facing each other can be cooled effectively. As a result, this method cannot achieve a good cooling effect either. Therefore, currently known battery cooling methods cannot solve the above problems.

To solve the problem of temperature rise of a battery affecting the lifespan, performance, and safety of the battery, an embodiment of this application provides a cooling mechanism including an air cooling fin. The air cooling fin has two opposite sides, where a cooling channel is provided on surface of at least one side, and the cooling channel has a preset extension direction. Based on this, when the cooling mechanism is applied to a battery module, the air cooling fin may be disposed between two adjacent battery cells, so that the cooling channel is located on the side of the battery cell, thereby leading out heat generated by the battery cell through the cooling channel in a preset direction. This improves the cooling performance of the battery module and prevents excessively high temperature of the battery module, which affects the lifespan, performance, and safety of the battery.

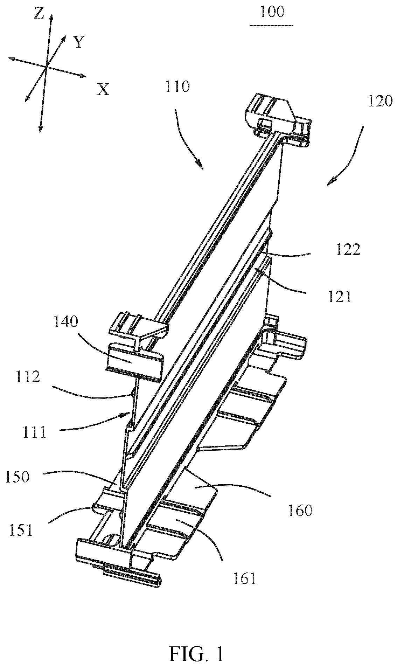

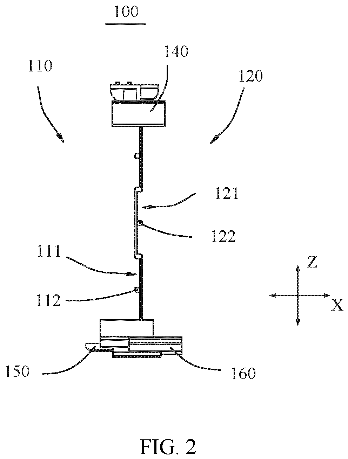

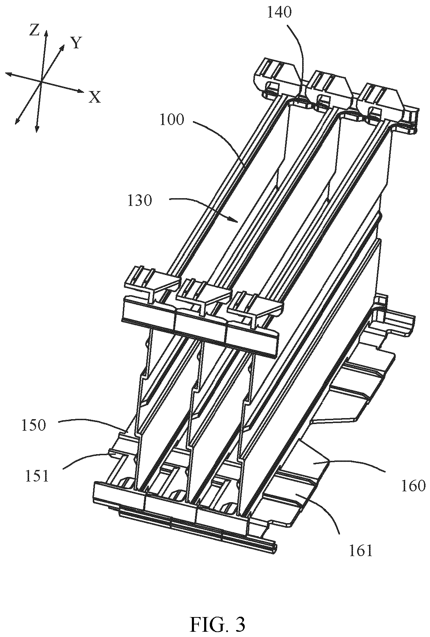

FIG. 1 is a schematic structural diagram of an air cooling fin according to an embodiment of this application; FIG. 2 is a schematic structural diagram of the air cooling fin in FIG. 1 from another perspective; and FIG. 3 is a schematic structural diagram of a cooling mechanism according to an embodiment of this application.

Referring to FIGs. 1 to 3, an embodiment of this application provides a cooling mechanism including an air cooling fin 100. The air cooling fin 100 has a first side 110 and a second side 120 opposite in a first direction X, and the air cooling fin 100 is provided with a cooling channel extending longitudinally in a second direction Y on at least one of the first side 110 and the second side 120, where the first direction X is perpendicular to the second direction Y

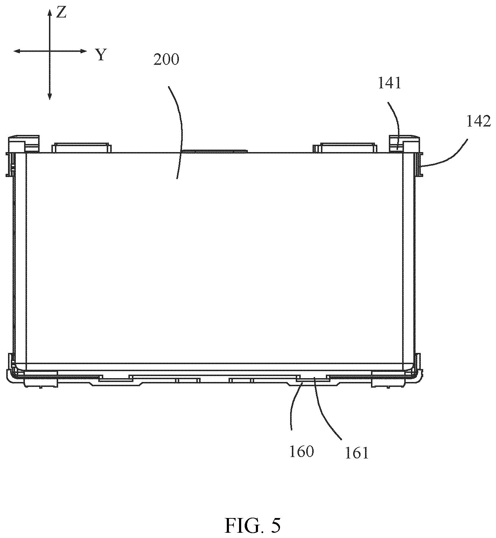

In the technical solution of this embodiment of this application, with the cooling channel provided on at least one of the two opposite sides of the air cooling fin 100 in the first direction X, and the cooling channel extending longitudinally in the second direction Y, the cooling channel on the air cooling fin 100 extending longitudinally in the second direction Y can accelerate the diffusion of heat when the air cooling fin 100 is applied to a workpiece. This improves the cooling performance of the workpiece, and thus extends the lifespan and enhances performance and safety of the workpiece. It can be understood that when the cooling mechanism is applied to a battery module, the air cooling fin 100 can be disposed between two adjacent battery cells 200 (refer to FIG. 5) of the battery module. In this case, the first direction X is parallel to the arrangement direction of the battery cells 200.

According to some embodiments of this application, the air cooling fin 100 is provided with a first groove 111 on surface of the first side 110, where the first groove 111 forms a cooling channel; and the air cooling fin 100 is provided with a second groove 121 on surface of the second side 120, where the second groove 121 forms a cooling channel. With the first groove 111 and the second groove 121 provided separately on the surfaces of the two opposite sides of the air cooling fin 100, cooling channels are separately provided on the two opposite sides of the air cooling fin 100, thereby improving the cooling effect.

Specifically, the first groove 111 and the second groove 121 provided on the air cooling fin 100 may be formed during injection molding of the air cooling fin 100, or may be formed by cutting after the air cooling fin 100 is formed. Regarding the specific shape of the first groove 111 and the second groove 121, a rectangular air cooling fin 100 is used as an example. The first groove 111 and the second groove 121 extend longitudinally in a length direction of the air cooling fin 100, a groove width direction of the first groove 111 and the second groove 121 is parallel to a width direction of the air cooling fin 100, and a groove depth direction of the first groove 111 and the second groove 121 is parallel to a thickness direction of the air cooling fin 100.

It can be understood that when the cooling mechanism is applied to a battery module, the air cooling fin 100 may be provided between two adjacent battery cells 200 of the battery module, a surface of the first side 110 of the air cooling fin 100 abuts against a side surface of one battery cell 200, and a surface of the second side 120 of the air cooling fin 100 abuts against a side surface of the other battery cell 200. The first groove 111 and the second groove 121 are respectively located on sides of the two adjacent battery cells 200, so that when the battery cells 200 swell, the first groove 111 and the second groove 121 can provide space for the swelling of the battery cells 200, achieving the effect of absorbing the swelling force of the battery cells 200.

According to some embodiments of this application, both the first groove 111 and the second groove 121 are provided in plurality, and the first grooves 111 and the second grooves 121 are alternately arranged in a third direction, where the third direction is perpendicular to the first direction X, and the third direction is also perpendicular to the second direction Y With the multiple first grooves 111 and multiple second grooves 121 alternately arranged in the third direction, the number of cooling channels is increased, and each section in the third direction is effectively cooled.

In another embodiment, one first groove 111 is provided, and multiple second grooves 121 are provided. Alternatively, multiple first grooves 111 are provided, and one second groove 121 is provided. For example, in a specific embodiment, one first groove 111 is provided, and two second grooves 121 are provided. In the third direction, the first groove 111 is located between the two second grooves 121, achieving an even distribution of multiple cooling channels in the third direction.

According to some embodiments of this application, groove bottoms of the first groove 111 and the second groove 121 may optionally be provided with protruding structures to limit and support the battery cell 200. A first protrusion 112 and a second protrusion 122 may be formed during injection molding of the air cooling fin 100, or may be provided after the air cooling fin 100 is formed. Further, the first protrusion 112 and the second protrusion 122 may be long strips extending in the second direction Y, to stably support the battery cell 200 in the second direction Y

Specifically, the first protrusion 112 is provided on the groove bottom of the first groove 111, and size of the first protrusion 112 in the first direction X is smaller than groove depth of the first groove 111 in the first direction X. With the first protrusion 112 provided at the groove bottom of the first groove 111, and the size of the first protrusion 112 in the first direction X being smaller than the groove depth of the first groove 111 in the first direction X, when the first groove 111 absorbs the swelling force of the battery cell 200, the first protrusion 112 can limit and support the battery cell 200 within the first groove 111, preventing the battery cell 200 from excessively swelling and deforming. In addition, the first protrusion 112 can also enhance the structural strength of the first groove 111.

Further, the second protrusion 122 is provided on the groove bottom of the second groove 121, and the size of the second protrusion 122 in the first direction X is smaller than groove depth of the second groove 121. When the second groove 121 absorbs the swelling force of the battery cell 200, the second protrusion 122 can limit and support the battery cell 200 within the second groove 121, preventing the battery cell 200 from excessively swelling and deforming. In addition, the second protrusion 122 can also enhance the structural strength of the second groove 121.

According to some embodiments of this application, the cooling mechanism includes multiple air cooling fins 100 arranged apart in the first direction X, and an accommodating space 130 for accommodating the battery cell 200 is formed between adjacent two of the air cooling fins 100, and the cooling channel communicates with the accommodating space 130. With the multiple air cooling fins 100 arranged apart in the first direction X, the accommodating space 130 for accommodating the battery cell 200 formed between the adjacent two of the air cooling fins 100, and the accommodating space 130 communicating with the cooling channel, cooling channels are provided on two opposite sides of the battery cell 200, thereby improving the cooling effect for the battery cell 200.

It can be understood that when the battery module is provided with multiple rows of battery cells 200 arranged in the first direction X, the structure of the cooling mechanism may be correspondingly adjusted to include multiple rows of air cooling fins 100 arranged apart in the first direction X.

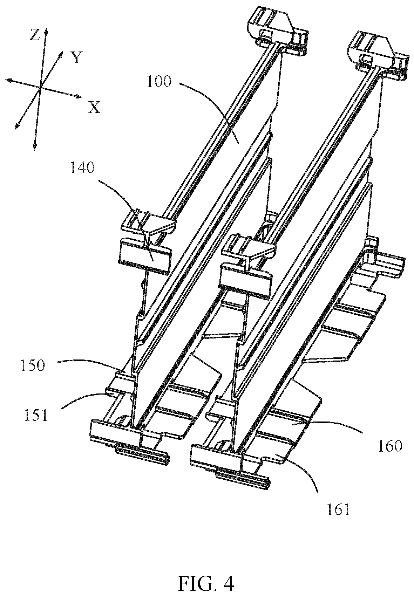

FIG. 4 is a detailed diagram of an air cooling fin of the cooling mechanism in FIG. 3. FIG. 5 is a schematic diagram of an assembly structure of an air cooling fin and a battery cell according to an embodiment of this application.

Referring to FIGs. 4 and 5, according to some embodiments of this application, at least two clamping members 140 are provided at an edge of the air cooling fin 100, and the at least two clamping members 140 form a clamping space for clamping the battery cell 200, where the third direction is perpendicular to the first direction X, and the third direction is also perpendicular to the second direction Y With the at least two clamping members 140 provided at the edge of the air cooling fin 100, and the at least two clamping members 140 forming the clamping space for clamping the battery cell 200, the air cooling fin 100 not only improves the cooling effect for the battery cell 200 but also fixes the battery cell 200, thereby enhancing the stability of the battery structure.

Further, two, four, or more clamping members 140 may be provided. When two clamping members 140 are provided, the two clamping members 140 are provided at two ends of the air cooling fin 100 in the second direction Y, or the two clamping members 140 are provided at two ends of the air cooling fin 100 in the third direction, so as to clamp the battery cell 200. When four clamping members 140 are provided, the clamping members 140 may be provided at two ends of the air cooling fin 100 in the second direction Y and two ends of the air cooling fin 100 in the third direction, so that the air cooling fin 100 is more stably clamped in the clamping space. When more than four air cooling fins 100 are provided, the clamping members 140 may be provided at two ends of the air cooling fin 100 in the second direction Y and two ends of the air cooling fin 100 in the third direction, with two or more clamping members 140 provided on at least one end of the four ends, so as to enhance the stability in clamping the battery cell 200.

According to some embodiments of this application, the clamping member 140 includes a first clamping section 141 extending in the second direction Y and a second clamping section 142 extending in the third direction. The first clamping section 141 and the second clamping section 142 respectively abut against two adjacent side surfaces of the battery cell 200. The first clamping section 141 and the second clamping section 142 extend in two mutually perpendicular directions, so that a single clamping member 140 forms a right-angled accommodating space 130. Two side walls of the right-angled accommodating space 130 respectively abut against the two adjacent side surfaces of the battery cell 200, and multiple clamping members 140 together form the clamping space, so that the structure is simple and clamping is convenient. The clamping member 140 and the air cooling fin 100 may be integrally formed, specifically, through injection molding, to simplify the forming method of the air cooling fin 100.

According to some embodiments of this application, the air cooling fin 100 is provided with a first connecting member 150 on the first side 110, and is provided with a second connecting member 160 that matches the first connecting member 150 on the second side 120. In adjacent two of the air cooling fins 100, the first connecting member 150 of one is fixedly connected to the second connecting member 160 of the other. With the first connecting member 150 and the second connecting member 160 respectively provided on two opposite sides of the air cooling fin 100, when multiple air cooling fins 100 are arranged side by side in the first direction X, adjacent two of the air cooling fins 100 may be connected through the first connecting member 150 and the second connecting member 160, thereby enhancing the structural stability of the battery. One or more first connecting members 150 and one or more second connecting members 160 may be provided. When multiple first connecting members 150 and multiple second connecting members 160 are provided, the multiple first connecting members 150 are arranged in the second direction Y, and the multiple second connecting members 160 are arranged in the second direction Y, providing a more stable connection. The first connecting member 150, the second connecting member 160, and the air cooling fin 100 may be integrally formed, specifically through injection molding, to provide high structural strength.

Furthermore, the first connecting member 150 is provided with a clamping protrusion 151, and the second connecting member 160 is provided with a clamping groove 161, where the clamping groove 161 snap-fits with the clamping protrusion 151. Connection between adjacent two of the air cooling fins 100 is achieved through snap-fit between the clamping groove 161 and the clamping protrusion 151, enabling convenient and quick operation. Specifically, the clamping protrusion 151 extends outward relative to the air cooling fin 100 in the first direction X. The clamping groove 161 has a groove opening facing towards the third direction and a groove opening facing towards the first direction X, so that the clamping protrusion 151 can snap-fit into the clamping groove 161 along the first direction X or the third direction. This is simple in structure and convenient to operate.

Furthermore, the first connecting member 150 and the second connecting member 160 are each provided with a support portion for supporting the battery cell 200. After the first connecting member 150 and the second connecting member 160 are snap-fit together through the clamping groove 161 and the clamping protrusion 151, the support portions on the first connecting member 150 and the second connecting member 160 support the battery cell 200 between adjacent two of the air cooling fins 100, ensuring that the battery cell 200 is better fixed between the adjacent two of the air cooling fins 100.

An embodiment of this application further provides a battery module.

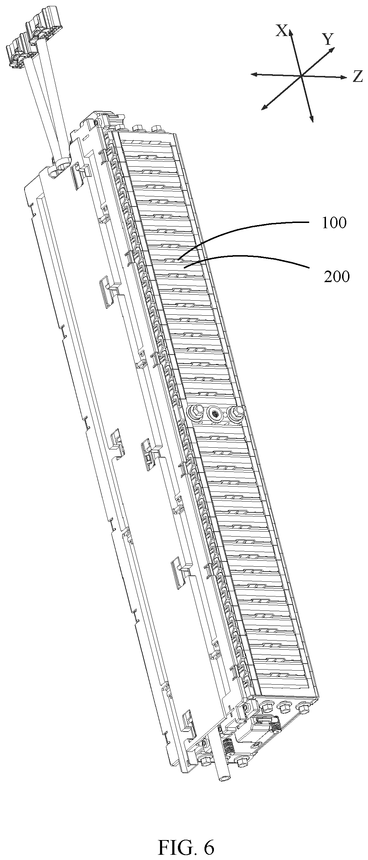

FIG. 6 is a schematic diagram of a battery module according to an embodiment of this application.

Referring to FIG. 6, according to some embodiments of this application, the battery module includes the foregoing cooling mechanism.

Furthermore, the battery module further includes a battery module rack, the air cooling fin 100 is provided within the battery module rack, and the battery module rack is provided with an air inlet and an air outlet that are opposite in the second direction Y The battery module rack provides further support for the battery cell 200, enhancing the structural stability of the battery module. In addition, providing the air inlet and the air outlet that are opposite in the second direction Y on the battery module rack improves the cooling effect of the cooling channel.

In the battery module, the battery cell 200 may be provided in plurality, and the plurality of battery cells 200 may be connected in series, parallel, or series-parallel, where being connected in series-parallel means a combination of series and parallel connections of the plurality of battery cells 200. The plurality of battery cells 200 may be directly connected in series, parallel, or series and parallel, and an entirety constituted by the plurality of battery cells 200 is accommodated in the box. Certainly, a plurality of battery cells 200 may first be connected in series, parallel, or series and parallel to constitute a battery module, and then a plurality of battery modules are connected in series, parallel, or series and parallel to constitute a whole, and accommodated in the box. The battery module may further include other structures. For example, the battery module may further include a busbar configured to implement electrical connection between the plurality of battery cells 200.

Each battery cell 200 may be a secondary battery or a primary battery, and may be a lithium-sulfur battery, a sodium-ion battery, or a magnesium-ion battery, without being limited thereto. The battery cell 200 may be cylindrical, straight, cuboid, or of other shapes.

An embodiment of this application further provides an electric apparatus. According to some embodiments of this application, the electric apparatus includes a battery module, where the battery module is configured to supply electric energy.

The electric apparatus may be, but is not limited to, a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

According to some embodiments of this application, referring to FIGs. 1 to 3, this application provides a cooling mechanism including multiple air cooling fins 100 arranged apart in a first direction X, and an accommodating space 130 for accommodating a battery cell 200 is formed between adjacent two of the air cooling fins 100, and a cooling channel communicates with the accommodating space 130. Any one of the air cooling fins 100 has a first side 110 and a second side 120 opposite in the first direction X. The air cooling fin 100 is provided with two first grooves 111 on surface of the first side 110, and the air cooling fin 100 is provided with one second groove 121 on surface of the second side 120. Both the first groove 111 and the second groove 121 form cooling channels, and the first grooves 111 and the second groove 121 are alternately arranged in a third direction, where the third direction is perpendicular to the first direction X, and the third direction is also perpendicular to a second direction Y In this way, the cooling channels on the first side 110 and the second side 120 are all used to cool the battery cell 200, evenly enhancing the cooling efficiency for the battery cell 200 at all locations.

A groove bottom of the first groove 111 is provided with a first protrusion 112, and a groove bottom of the second groove 121 is provided with a second protrusion 122, to limit and support the battery cell 200, preventing the battery cell 200 from excessively swelling and deforming, and also enhancing the structural strength. Clamping members 140 are provided on two ends of the air cooling fin 100 in the second direction Y, and the clamping members 140 on the two ends form a clamping space for clamping the battery cell 200, thereby fixing the battery cell 200 and enhancing the structural stability of the battery. The air cooling fin 100 is provided with a first connecting member 150 on the first side 110, and is provided with a second connecting member 160 that matches the first connecting member 150 on the second side 120. In adjacent two of the air cooling fins 100, the first connecting member 150 of one is fixedly connected to the second connecting member 160 of the other. This allows adjacent two of the air cooling fins 100 to be connected through the first connecting member 150 and the second connecting member 160, thereby enhancing the structural stability of the battery.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several embodiments of this application, and descriptions thereof are specific and detailed, but should not be construed as a limitation on the scope of this application. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A cooling mechanism comprising an air cooling fin (100), wherein
the air cooling fin (100) has a first side (110) and a second side (120) opposite in a first direction (X), and the air cooling fin (100) is provided with a cooling channel extending longitudinally in a second direction (Y) on the first side (110) and/or the second side (120), wherein
the first direction (X) is perpendicular to the second direction (Y).

2. The cooling mechanism according to claim 1, wherein the air cooling fin (100) is provided with a first groove (111) on surface of the first side (110), wherein the first groove (111) forms a cooling channel; and
the air cooling fin (100) is provided with a second groove (121) on surface of the second side (120), wherein the second groove (121) forms a cooling channel.

3. The cooling mechanism according to claim 2, wherein the first groove (111) and/or the second groove (121) is provided in plurality; and
the first grooves (111) and the second grooves (121) are alternately arranged in a third direction (Z), wherein
the third direction (Z) is perpendicular to the first direction (X), and the third direction (Z) is also perpendicular to the second direction (Y).

4. The cooling mechanism according to claim 2 or 3, wherein a groove bottom of the first groove (111) is provided with a first protrusion (112), and size of the first protrusion (112) in the first direction (X) is smaller than groove depth of the first groove (111) in the first direction (X); and/or
a groove bottom of the second groove (121) is provided with a second protrusion (122), and the size of the second protrusion (122) in the first direction (X) is smaller than groove depth of the second groove (121).

5. The cooling mechanism according to any one of claims 1 to 4, wherein the cooling mechanism comprises multiple air cooling fins (100) arranged apart in the first direction (X); and
an accommodating space (130) for accommodating a battery cell (200) is formed between adjacent two of the air cooling fins (100), and the cooling channel communicates with the accommodating space (130).

6. The cooling mechanism according to claim 5, wherein at least two clamping members (140) are provided at an edge of the air cooling fin (100); wherein
the at least two clamping members (140) are provided at two ends of the air cooling fin (100) in the second direction (Y), and/or the at least two clamping members (140) are provided at two ends of the air cooling fin (100) in the third direction (Z), so as to form a clamping space for clamping the battery cell (200); wherein
the third direction (Z) is perpendicular to the first direction (X), and the third direction (Z) is also perpendicular to the second direction (Y).

7. The cooling mechanism according to claim 6, wherein the clamping member (140) comprises a first clamping section (141) extending in the second direction (Y) and a second clamping section (142) extending in the third direction (Z); wherein
the first clamping section (141) and the second clamping section (142) respectively abut against two adjacent side surfaces of the battery cell (200).

8. The cooling mechanism according to any one of claims 5 to 7, wherein the air cooling fin (100) is provided with a first connecting member (150) on the first side (110), and is provided with a second connecting member (160) that matches the first connecting member (150) on the second side (120); and
in adjacent two of the air cooling fins (100), the first connecting member (150) of one is fixedly connected to the second connecting member (160) of the other.

9. The cooling mechanism according to claim 8, wherein the first connecting member (150) is provided with a clamping protrusion (151); and
the second connecting member (160) is provided with a clamping groove (161), wherein
the clamping groove (161) snap-fits with the clamping protrusion (151).

10. The cooling mechanism according to claim 8 or 9, wherein the first connecting member (150) and the second connecting member (160) are each provided with a support portion for supporting the battery cell (200).

11. A battery module comprising the cooling mechanism according to any one of claims 1 to 10.

12. The battery module according to claim 11, wherein the battery module further comprises a battery module rack, and the air cooling fin (100) is provided within the battery module rack; wherein
the battery module rack is provided with an air inlet and an air outlet that are opposite in the second direction (Y).

13. An electric apparatus comprising the battery module according to claim 11 or 12, wherein the battery module is configured to supply electrical energy.
